(19) Europäisches Patentamt
European Patent Office
Office européen des brevets

(11) Publication number: **0 437 247 A2**

# (12) EUROPEAN PATENT APPLICATION

(21) Application number: **91100206.1**

(22) Date of filing: **08.01.91**

(51) Int. Cl.$^5$: **C09D 183/07**, C08L 83/07, C08K 5/37

(30) Priority: **09.01.90 US 462201**

(43) Date of publication of application: **17.07.91 Bulletin 91/29**

(84) Designated Contracting States: **DE FR GB**

(71) Applicant: **DOW CORNING CORPORATION**
**P.O. Box 1767**
**Midland Michigan 48686-0994 (US)**

(72) Inventor: **Lutz, Michael Andrew**
**1815 Wyllys**
**Midland, Michigan (US)**
Inventor: **Puder, Allen Brent**
**10117 Adriana Avenue**
**Cupertino, California (US)**
Inventor: **Willy, William Edward**
**51733 Alta Vista Drive**
**Oakhurst, California (US)**

(74) Representative: **Spott, Gottfried, Dr. et al**
**Spott Weinmiller & Partner**
**Sendlinger-Tor-Platz 11**
**W-8000 München 2 (DE)**

## (54) UV curable silicone resin-organic mercaptan composition.

(57) An ultraviolet radiation curable composition of a silicone resin containing phenyl and vinyl bearing siloxane units and having a degree of substitution of from 1.2 to 1.8, an organic mercaptan, a photoinitiator and a free radical inhibitor are useful as coatings on paper, plastic and glass. Methods of making the compositions include cohydrolyzing silanes and reacting the resulting silicone resin with organofunctional mercaptans having both thiol functionality as well as carboxylic, alcoholic, amine and urethane functionality and an in situ method, in which the silicone resin, organic mercaptan and organofunctional compounds are blended.



Jouve, 18, rue Saint-Denis, 75001 PARIS

# UV CURABLE SILICONE RESIN-ORGANIC MERCAPTAN COMPOSITION

This invention relates to ultraviolet radiation curable compositions and more specifically to compositions which contain aliphatic unsaturated functional polysiloxane and mercapto functional compounds.

Rapid radiation curable silicone compositions can be prepared from vinyl functional silicone intermediates and mercapto functional silicone intermediates. Such compositions are described in U.S. Patent No. 4,780,486, issued October 25, 1988, to Chi-long Lee and Michael A. Lutz (Lee et al). The resultant cured films derived from these compositions exhibited relatively low toughness, modulus, solvent resistance and adhesion. A need exists for rapid, radiation curable silicone compositions which cure to films which exhibit improved toughness and higher modulus, solvent resistance and adhesion. The compositions described by Lee et al contain alkenyl functional, linear triorganosiloxy endblocked polydiorganosiloxane, a mercapto functional crosslinker, a photosensitizer, an amine storage stabilizer and a reinforcing agent. Lee et al describe compositions which are useful as primary coatings for optical fibers with a high refractive index as containing dimethylvinylsiloxy endblocked polydiorganosiloxane having siloxane units selected from dimethylsiloxane units, methylphenylsiloxane units and diphenylsiloxane units where at least 30 percent of the organic radicals are phenyl, a mercapto organic compound selected from at least one of

$CH_3C(CH_2OOCCH_2SH)_3$,
$\{(HSCH_2CH_2COOCH_2)_3CCH_2\}_2O$,
$C(CH_2OOCCH_2CH_2SH)_4$,
$C(CH_2OOCCH_2SH)_4$,
$CH_3C(CH_2OOCCH_2CH_2SH)_3$,
$CH_3CH_2C(CCH_2OOCCH_2CH_2SH)_3$, and
$CH_3CH_2C(CH_2OOCCH_2SH)_3$,

photoinitiator and viscosity stabilizers. Such compositions are useful as primary coatings for optical fibers, but other coating applications require higher modulus.

This invention relates to a composition consisting essentially of a silicone resin having a general average unit formula

$$R_aSiO_{(4-a)/2}$$

in which each R in each unit is independently a monovalent organic radical where at least 10 mole percent of the total R are phenyl radicals and at least two R per molecule are aliphatic unsaturated radicals which react with mercapto functionality and a has an average value of from 1.2 to 1.8 ; an organic mercaptan composed of carbon, hydrogen, sulfur and oxygen in which there is at least two mercapto groups per molecule ; an effective amount of photoinitiator to cause the composition to cure upon exposure to ultraviolet radiation ; and an effective amount of a free radical inhibitor to delay gellation during storage, the composition having more than two aliphatic unsaturated radicals per molecule in the silicone resin when the organic mercaptan has two mercapto groups per molecule or more than two mercapto groups per molecule in the organic mercaptan when the silicone resin has an average of two aliphatic unsaturated radicals per molecule or both more than two aliphatic unsaturated radicals per molecule in the silicone resin and more than two mercapto groups per molecule in the organic mercaptan and amount of silicone resin and organic mercaptan being such that there is from 0.5 to 1.5 aliphatic unsaturated radicals in the silicone resin for each mercapto group in the organic mercaptan.

This invention also relates to a composition consisting essentially of a silicone resin having a general average unit formula

$$(R^2)_aSiO_{(4-a)/2}$$

in which each $R^2$ in each unit is independently a monovalent organic radical selected from monovalent hydrocarbon radicals, halogenated monovalent hydrocarbon radicals, acrylate functional monovalent organic radicals, methacrylate functional monovalent organic radicals, acrylamido functional monovalent organic radicals, carboxy functional monovalent organic radicals, carbonol functional monovalent organic radicals and amino functional monovalent organic radicals and mixtures therereof, where at least 10 mole percent of the total $R^2$ are phenyl radicals and at least two $R^2$ per molecule are aliphatic unsaturated radicals which react with mercapto functionality and a has an average value of from 1.2 to 1.8 ; an organic mercaptan composed of carbon, hydrogen, sulfur and oxygen in which there is at least two mercapto groups per molecule ; an effective amount of photoinitiator to cause the composition to cure upon exposure to ultraviolet radiation ; and an effective amount of a free radical inhibitor to delay gellation during storage, the composition having more than two aliphatic unsaturated radicals per molecule in the silicone resin when the organic mercaptan has two mercapto groups per molecule or more than two mercapto groups per molecule in the organic mercaptan when the silicone resin has an average of two aliphatic unsaturated radicals per molecule or both more than two aliphatic unsaturated radicals per molecule in the silicone resin and more than two mercapto groups per molecule in the organic mercaptan and amount of silicone resin and organic mercaptan being such that there is from 0.5 to 1.5 aliphatic unsaturated radicals in the silicone resin for each mercapto group in the organic mercaptan.

The silicone resins of the present invention contain aliphatic unsaturated radicals which react with mercapto functionality. These silicone resins have an average of 1.2 to 1.8 organic radical bonded per silicon atom and at least 10 mole percent of the organic radicals are phenyl. The silicone resins have per molecule at least two aliphatic unsaturated radicals which react with mercapto functionality. The silicone resin has a general average unit formula

$$R_aSiO_{(4-a)/2}$$

in which a has an average value of from 1.2 to 1.8 and R is a monovalent organic radical where at least 10 mole percent of the R are phenyl radicals and at least two R per molecule are aliphatic unsaturated radicals which react with mercapto functionality. The general average unit formula is the summation of individual siloxane units which are $SiO_2$ units, $RSiO_{3/2}$ units, $R_2SiO$ units, $R_3SiO_{1/2}$ units and each R in each siloxane unit is independently selected from the group as defined herein. Each siloxane unit does not need to be present in each silicone resin, but the siloxane units which are present need to provide an average value for a of from 1.2 to 1.8. Preferred silicone resins are presented by the following general formula of siloxane units $(SiO_2)_b(R'SiO_{3/2})_c(R''SiO_{3/2})_d(R^*R'SiO)_e(R^*R''SiO)_f(R^*R'R''SiO_{1/2})_g$ where b, c, d, e, f and g represent the mole percentages of the siloxane units in the silicone resin and the sum of b, c, d, e, f and g makes 100 mole percent. b has an average value sufficient to provide from 0 to 20 mole percent of $SiO_2$ units wherein the total number of siloxane units is 100 mole percent. c + d is sufficient to provide from 7.5 mole percent to 60 mole percent or less of $R'SiO_{3/2}$ units and/or $R''SiO_{3/2}$ units where the total number of siloxane units is 100 mole percent. e and f have values from zero to a value providing the remainder of siloxane units to make 100 mole percent. g has a value sufficient to provide 3 mole percent to 40 mole percent of $R^*R'R''SiO_{1/2}$ units where the total number of siloxane units is 100 mole percent. More preferred silicone resins are those in which b is zero, the sum of c + d has a value such that there is from 40 to 50 mole percent of $R'SiO_{3/2}$ and/or $R''SiO_{3/2}$ units, the sum of e + f has a value such that there is from 45 to 55 mole percent of $R^*R'SiO$ and/or $R^*R''SiO$ units and g has a value such that there is from 4 to 5 mole percent $R^*R'R''SiO_{1/2}$ units. Each R* is independently an alkyl, halogenated alkyl or aryl substitutent, preferably methyl, propyl, 3,3,3-trifluoropropyl and phenyl. Each R' is independently R* or an aliphatic unsaturated radical which reacts with mercapto functionality, including alkenyl such as vinyl, allyl, hexenyl and cyclohexenyl, acryloxy of the formula

$-R^{**}O(O)CH=CH_2$, methacryloxy of the formula
$-R^{**}OC(O)C(CH_3)=CH_2$, acrylamido of the formula
$-R^{**}NHC(O)CH=CH_2$, and N-methylacrylamido of the formula
$-R^{**}N(CH_3)C(O)CH=CH_2$.

Each R" is independently R*, R' or an organofunctional group which contains $-C(O)OH$, $-C(O)OR^3$, $-COH$, $-NH_2$, $-NHR^3$, $-N(R^3)_2$ or $-N(H)-C(O)-$ and each R** is independently a divalent hydrocarbon radical of from 1 to 10 carbon atoms, such as methylene, ethylene, propylene, isopropylene, butylene, isobutylene, hexylene and decylene. Each $R^3$ is independently an alkyl radical having from 1 to 10 carbon atoms, such as methyl, ethyl, propyl, isopropyl, butyl, isobutyl, tertiary-butyl, pentyl, hexyl, heptyl, octyl, nonyl and decyl. The silicone resins can be one resin or a blend of two or more resins. The silicone resins can contain residual silicon-bonded groups which result from their preparation, such as hydroxyl groups (Si-OH) and alkoxy groups (Si-OR).

The silicone resins used in the present invention can be made by know methods. For example, cohydrolysis of hydrolyzable silanes can be used to make these silicone resins. The hydrolyzable silanes include the chlorosilanes, alkoxysilanes, ketoximosilanes and acetoxysilanes which correspond to the various siloxane units of the above silicone resin formula. To illustrate silanes which might be used to make a silicone resin, one could cohydrolyze phenyltrichlorosilane, methyltrichlorosilane, trimethylchlorosilane and methylvinyldichlorosilane. The combination of silanes are chosen to provide from 1.2 to 1.8 silicon-bonded carbon groups per silicon atom, preferably from 1.4 to 1.65 silicon-bonded carbon groups per silicon atom. The combination of silanes are also chosen to provide a silicone resin having at least 10 percent phenyl groups based on the total number of silicon-bonded carbon groups in the silicone resin. Also the combination of silanes is such that there is at least two R per molecule which contains aliphatically unsaturated radicals which react with the mercapto functionality.

This invention also relates to a method of preparing silicone resin which contains organofunctional groups other than thiol and aliphatic unsaturated groups. This method comprises cohydrolyzing a mixture of hydrolyzable silanes of the general average formula

$$R_aSiX_{(4-a)}$$

in which each R is independently a monovalent organic radical where at least 10 percent is phenyl and at least two R per molecule is alkenyl or methacryloxyalkylene, X is a hydrolyzable radical and a has an average value of from 1.2 to 1.8, to make a silicone resin of the average general siloxane unit formula

$$R_aSiO_{(4-a)/2}$$

and then reacting the resulting silicone resin with a compound containing both a thiol (mercapto functionality) and an organofunctionality selected from the group consisting of -C(O)OH, -C(O)OR$^3$, -COH, -$NH_2$, -NHR$^3$, -N(R$^3$)$_2$ or -N(H)-C(O)- where R$^3$ is as defined above, to obtain a silicone resin which has the following formula $(SiO_2)_b(R'SiO_{3/2})_c(R''SiO_{3/2})_d(R^*R'SiO)_e(R^*R''SiO)_f(R^*R'R''SiO_{1/2})_g$ where b, c, d, e, f and g have values as described above. R*, R' and R" are defined as described above except that the aliphatic unsaturated radical are selected from alkenyl and methacryloxy of the formula

$-R^{**}OC(O)C(CH_3)=CH_2$.

in which each R" is independently R*, R' or an organofunctional group which contains -COOH, -COH, -$NH_2$, -NHR*, -NR*$_2$ or -N(R*)-C(O)- and R$^3$ and R** are as defined above. In this method, it is undesirable to make a silicone resin which contains acrylate and acrylamide functionalities because these groups undergo free radical homopolymerization and processable silicone resins are not obtained. The reaction can be accelerated by heat. The resulting organofunctional silicone resin which also contains aliphatically unsaturated radicals which react with mercapto functionality can be used to make the compositions of this invention by combining it with an organic mercaptan as described herein.

The crosslinked density, flexibility of cured products and the modulus of cured products are controlled by selecting the amount of aliphatically unsaturated radicals in the silicone resin and the average degree of substitution of the silicon atoms by silicon-bonded carbon groups. For example, increasing the average number of aliphatically unsaturated radicals per molecule increases the modulus and decreases the flexibility with other composition parameters remaining constant. Increasing the average degree of substitution of the silicon atom increases the flexibility and decreases the modulus with the other composition parameters remaining constant. These are general guidelines and the proportional increases and decreases in the modulus and flexibility can be varied with the kinds of other R groups, the amount of phenyl, the kind of aliphatically unsaturated radicals and the kinds and amounts of each of the siloxane units present in the silicone resin.

The organic mercaptan contains an average of at least two mercapto functional groups per molecule. In the compositions of the present invention, the number of aliphatically unsaturated groups per molecule in the silicone resin is more than two, if the number of mercapto functional groups in the organic mercaptan is two or if the number of aliphatically unsaturated groups per molecule in the silicone resin is two, then the average number of mercapto functional groups per molecule in the organic mercaptan must be more than two. The compositions of the present invention can contain silicone resin having per molecule more than two aliphatically unsaturated groups per molecule and organic mercaptan having per molecule more than two mercapto functional groups. The organic mercaptans can be illustrated by the following : trimethylolpropane trithioglycolate, trimethylolpropane tri-(3-mercaptopropionate), trimethylolethane trithioglycolate, polyethylene glycol dimercaptoacetates, glycol dimercaptoacetate and dipentaerythritol hexa-(3-mercaptopropionate). The preferred organic mercaptan is trimethylolpropane tri-(3-mercaptopropionate). Organic mercaptans can contain the thiol functionality and organofunctionality such as -COOH, -C(O)OR$^3$, -COH, -$NH_2$, -NHR$^3$, -N(R$^3$)$_2$ and -N(H)C(O)- where R$^3$ is as defined above. If the organofunctional organic mercaptans are used in the composition with the silicone resin, an in situ method of making organofunctional silicone resins is realized during the radiation cure of the composition. Mixtures of two or more organic mercaptans can be used. Examples of organofunctional organic mercaptans include mercaptoacetic acid [$HSCH_2C(O)OH$], 2-mercaptopropionic acid [$CH_3CH(SH)C(O)OH$], 3-mercaptopropionic acid, mercaptosuccinic acid [$HOC(O)CH_2CH(SH)C(O)OH$], o-mercaptobenzoic acid, 4-mercaptobutyric acid [$HSCH_2CH_2CH_2C(O)OH$], thiolactic acid [$CH_3CH(SH)C(O)OH$], thiomalic acid [$HOC(O)CH(SH)CH_2C(O)OH$], alpha-mercaptopropionyl glycine [$CH_3CH(SH)C(O)NHCH_2C(O)OH$], mercaptoethanol [$HSCH_2CH_2OH$], 3-mercapto-1,2-propanediol [[$HSCH_2CH(OH)CH_2OH$], 3-mercapto-3-pyridinol, n-butyl-3-mercaptopropionate [$HSCH_2CH_2C(O)OC_4H_9$], n-butylthioglycolate [$HSCH_2C(O)OC_4H_9$], methyl-3-mercaptopropionate [$HSCH_2CH_2C(O)OCH_3$], 2-mercapto-1-methylimidazole, 2-mercaptopyridine, 4-mercaptopyridine, 2-mercatoacetanilide [$C_6H_5NHC(O)CH_2SH$], 2-mercaptoaniline [$H_2NC_6H_4SH$], 3-mercaptoaniline, 4-mercaptoaniline, monothioglycerol, thiosalicylic acid, cysteine, ortho-aminothiophenol and $HSCH_2CH_2C(O)OH$.

Ultraviolet radiation capable of causing free radicals to form in the composition can be used to cure the composition of this invention. The ultraviolet radiation used to generate the free radical crosslinking reaction to effect polymerization of the composition and cure requires a photosensitization system. Examples of the photosensitization systems are known in the art, some specific photoinitiators include diethoxyacetophenone, benzophenone, dimethoxyphenylacetophenone, benzoin, 2-hydroxy-2-methyl-1-phenylpropan-1-one, with optional sensitizors such as N-methyldiethanolamine and amyldimethylaminobenzoate.

The compositions of the present invention can be prepared by mixing the ingredients at room temperature with conventional mixing equipment. In some cases the blending of the ingredients can be accomplished by some heating. Heating these ingredients can create degradation if the temperatures become too high or the

duration of the heating is for prolonged periods of time. The ingredients used to make the compositions of the present invention should be blended to make compatible mixtures. This compatibility is desirable to ensure that the cured products will form solid coherent coatings, films, sheets and encapsulants with consistent properties throughout. Incompatibility can cause weak spots, fisheyes and poor wetting of substrates on which the composition is deposited.

A method of making cured films is accomplished by first preparing the composition by mixing the silicone resin, the photoinitiator and the free radical inhibitor to form a compatible, homogeneous blend, applying the composition to a substrate such as an electronics device and then irradiating the composition with ultraviolet radiation in an amount sufficient to cure the composition.

The compositions of this invention contain an effective amount of a free radical inhibitor to delay gellation during storage. These free radical inhibitors include p-methoxyphenol (also know as MEHQ), catechol, 4-t-butylcatechol, phenothiazine, 2,6-di-t-butyl-p-methyl-phenol and N-phenyl-2-naphthylamine. The amounts of the free radical inhibitors are from zero to one weight percent based on the weight of the composition, more preferably from 0.01 to 0.25 weight percent. The most preferred free radical inhibitors are p-methoxyphenol, phenothiazine and mixtures thereof. The presence of hydroquinone as a free radical inhibitor appears to be undesirable from the standpoint of preparing high modulus and tensile strength cured products.

The compositions of the present invention are coatings for paper, plastic, glass, optical fibers, electrical and electronic devices. These coatings can be optical fiber coatings, conformal coatings and blob coatings in the electronics industry. The compositions cure rapidly to films with slick, tough surfaces and exhibit good adhesion to many substrates. In situations where shadow cure is desirable, an organic peroxide can be added to the composition.

The following examples are presented for illustrative purposes and should not be construed as limiting the invention which is properly delineated in the claims. "Part or parts" are parts by weight and the viscosities are values measured at 25°C. Me = methyl, Ph = phenyl and Vi = vinyl.

EXAMPLE 1

An ultraviolet radiation curable siloxane composition was prepared by mixing 100 parts of a silicone resin having the average siloxane unit formula $(MeSiO_{3/2})_{7.5}(PhSiO_{3/2})_{37.6}(Me_2SiO)_{30.1}(MeViSiO)_{20.0}(Me_3SiO_{1/2})_{4.8}(OH)_h$ which has a vinyl content of 5.2 weight percent, a value for $h$ to provide an OH content of 1.49 weight percent, a non-volatile content of 97.4 weight percent and a viscosity of 14.5 Pa·s, 20.23 parts of an organic mercaptofunctional compound having the formula

$$CH_3CH_2C(CH_2O\overset{\overset{O}{\|}}{C}CH_2CH_2SH)_3$$

{trimethylolpropane tri-(3-mercaptopropionate)}, 2.54 parts of photoinitiator of the formula

$$HO(CH_3)_2C-\overset{\overset{O}{\|}}{C}-C_6H_5$$

1.64 parts of a 10 weight percent solution of p-methoxyphenol (ca. 1300 ppm) (MEHQ) in toluene and 1.09 parts of a 5 weight percent solution of phenotiazine (ca. 400 ppm) in toluene. The resulting composition had a viscosity of 1.9 Pa·s and was transparent indicating a homogeneous compatible composition.

The resulting composition was cast onto aluminum Q-panels with mill finish, 500-A 35, at 8 mils wet thickness. The coating was cured by irradiating with ultraviolet radiation from two medium pressure mercury vapor arc lamps housed in an Ashdee UV-12H/2 Cure Reactor to give a dosage of 75 mJ/cm$^2$ as measured with an International Light IL-390 Light Bug. The resultant transparent, tack-free film had a Young's modulus of 5.3 MPa, a tensile strength at break of 1.2 MPa and an elongation at break of 23%.

EXAMPLE 2

To 100 parts of the composition of Example 1 was added 2.51 parts of allyltrimethoxysilane and 0.63 part

of tetrabutyltitanate. The resulting composition was cast onto aluminum Q-panels and cured as described in Example 1. The resultant transparent, tack-free film had a Young's modulus of 4.0 MPa, a tensile strength a break of 1.0 MPa and an elongation at break of 27%.

The same composition was cast onto glass plates and cured with 98 $mJ/cm^2$ of ultraviolet light. The resultant cured film could be removed from the glass plate, but only with great difficulty. The composition had good adhesion to glass, but could be mechanically removed. Some optical fiber coating applications would desirably have this kind of adhesion.

EXAMPLE 3

An ultraviolet radiation curable siloxane composition was prepared by mixing 100 parts of a silicone resin described in Example 1, 20.23 parts of an organic mercaptofunctional compound described in Example 1, .54 parts of the photoinitiator described in Example 1 and MEHQ, phenothiazine (PH), allyltrimethoxysilane (ATMS) and tetrabutyltitanate (TBT) as described in Table 1 in the amounts shown in parts. Each composition was coated on aluminum Q-panels and cured as described in Example 1 where the amount of ultraviolet radiation for curing was 100 $mJ/cm^2$. The tensile strength and elongation were measured at break.

TABLE 1

| COMPOSITION | MEHQ | PH | ATMS | TBT | YOUNG'S MPa | TENSILE STRENGTH MPa | ELONGATION % |
|---|---|---|---|---|---|---|---|
| 1 | 1.34 | 1.34 | --- | --- | 7.2 | 1.3 | 19 |
| 2 | 0.31 | --- | --- | --- | 6.0 | 1.6 | 27 |
| 3 | 2.74 | --- | --- | --- | 5.8 | 1.3 | 27 |
| 4 | 1.64 | 1.09 | 2.51 | --- | 5.1 | 1.1 | 24 |
| 5 | 2.74 | --- | 1.26 | --- | 4.7 | 1.0 | 23 |
| 6 | 1.64 | 1.09 | 1.26 | 0.63 | 4.3 | 0.9 | 23 |

COMPARISON EXAMPLE 1

A composition was prepared using 100 parts of the silicone described in Example 1, 19.1 parts of the organic mercaptofunctional compound described in Example 1, 1.2 parts of the photoinitiator described in Example 1, 1.43 parts of hydroquinone and 0.38 part of phenothiazine. This composition was coated on aluminum Q-panels, cured with ultraviolet radiation using the equipment described in Example 1 providing 100 $mJ/cm^2$. The resulting film was tested as described in Example 1 and had a Young's modulus of 21.3 MPa, a tensile strength at break of 0.4 MPa and an elongation at break of 35%. This example showed that hydroquinone containing compositions were inferior to p-methoxyphenol and phenothiazine containing compositions with the result that the cured properties as exhibited by the Young's modulus and tensile strength at break were substantially lower with the presence of the hydroquinone.

EXAMPLE 4

Composition A was prepared by mixing 100 parts of the silicone resin described in Example 1, 25 parts of the organic mercaptan described in Example 1, 150 ppm of phenothiazine and an effective amount of the photoinitiator described in Example 1.

Composition B was prepared by mixing the ingredients as described in Composition A, plus 5 parts of an organofunctional compound with the formula $HSCH_2CH_2COOH$.

Composition C was prepared by mixing the ingredients as described in Composition A, plus 10 parts of $HSCH_2CH_2COOH$.

These compositions were irradiated with ultraviolet light and cured on glass substrates. Composition B exhibited the strongest adhesion to the glass substrate and both Composition B and Composition C exhibited improved adhesion over Composition A.

EXAMPLE 5

The silicone resin of Example 1 was reacted with $HSCH_2CH_2COOH$ in an amount such that there was five mercapto groups per 15 vinyl group in the silicone resin. Mixing the resulting organofunctional silicone resin (OSR) with $HSCH_2CH_2OCH_2CH_2SH$ and photoinitiator gave a composition cured by irradiation with ultraviolet radiation which was more flexible and tougher than the same composition prepared without having the silicone resin reacted with $HSCH_2CH_2COOH$.

A composition was prepared by mixing 100 parts of OSR, 20 parts of a dithiol polyethylene glycol having an average molecular weight of 370, 150 ppm phenothiazine and an effective amount of a photoinitiator. Curing this composition by exposure to ultraviolet light provided a cured film in which no thermal cracking was observed after 20 days at 420°F. The cured film was flexible and stretchable.

EXAMPLE 6

A composition was prepared by adding 1.0 part of 2-hydroxy-2-methyl-1-phenylpropan-1-one and 1.0 part of diisopropylaminoethanol to 79.7 parts of the silicone resin as described in Example 1. This mixture was blended and then 16.5 parts of the organic mercaptan as described in Example 1 and 2.8 parts of polyethylene glycol-di-(3-mercapto-propionate) was mixed into it. The resulting composition was stored in an opaque container, it had a viscosity of 2.5 Pa·s and a specific gravity of 1.30. Coating the composition onto a substrate and curing by exposure to 50 $mJ/cm^2$, the resulting cured film had a durometer 60 on the Shore A scale, the modulus at 2.5% elongation was 3.4 MPa, the tensile strength at break was 1.9 MPa and the elongation at break was 50%.

## Claims

1. A composition consisting essentially of a silicone resin having a general average unit formula

$$R_aSiO_{(4-a)/2}$$

in which each R in each unit is independently a monovalent organic radical where at least 10 mole percent of the total R are phenyl radicals and at least two R per molecule are aliphatic unsaturated radicals which react with mercapto functionality and a has an average value of from 1.2 to 1.8 ;

an organic mercaptan composed of carbon, hydrogen, sulfur and oxygen in which there is at least two mercapto groups per molecule ;

an effective amount of photoinitiator to cause the composition to cure upon exposure to ultraviolet radiation ; and

an effective amount of a free radical inhibitor to delay gellation during storage,

the composition has more than two aliphatic unsaturated radicals per molecule in the silicone resin when the organic mercaptan has two mercapto groups per molecule or more than two mercapto groups per molecule in the organic mercaptan when the silicone resin has an average of two aliphatic unsaturated radicals per molecule or both more than two aliphatic unsaturated radicals per molecule in the silicone resin and more than two mercapto groups per molecule in the organic mercaptan and amount of silicone resin and organic mercaptan being such that there is from 0.5 to 1.5 aliphatic unsaturated radicals in the silicone resin for each mercapto group in the organic mercaptan.

**2.** A composition consisting essentially of a silicone resin having a general average unit formula

$$R_aSiO_{(4-a)/2}$$

in which each R in each unit is independently a monovalent organic radical selected from monovalent hydrocarbon radicals, halogenated monovalent hydrocarbon radicals, acrylate functional monovalent hydrocarbon radicals, methacrylate functional monovalent hydrocarbon radicals, acrylamido functional monovalent hydrocarbon radicals, carboxy functional monovalent hydrocarbon radicals, carbonol functional monovalent hydrocarbon radicals and amino functional monovalent hydrocarbon radicals and mixtures thereof, where at least 10 mole percent of the total R are phenyl radicals and at least two R per molecule are aliphatic unsaturated radicals which react with mercapto functionality and a has an average value of from 1.2 to 1.8 ;

an organic mercaptan composed of carbon, hydrogen, sulfur and oxygen in which there is at least two mercapto groups per molecule ;

an effective amount of photoinitiator to cause the composition to cure upon exposure to ultraviolet radiation ; and

an effective amount of a free radical inhibitor to delay gellation during storage,

the composition has more than two aliphatic unsaturated radicals per molecule in the silicone resin when the organic mercaptan has two mercapto groups per molecule or more than two mercapto groups per molecule in the organic mercaptan when the silicone resin has an average of two aliphatic unsaturated radicals per molecule or both more than two aliphatic unsaturated radicals per molecule in the silicone resin and more than two mercapto groups per molecule in the organic mercaptan and amount of silicone resin and organic mercaptan being such that there is from 0.5 to 1.5 aliphatic unsaturated radicals in the silicone resin for each mercapto group in the organic mercaptan.

**3.** A method of preparing a silicone resin comprising cohydrolyzing a mixture of hydrolyzable silanes of the average general formula

$$R_aSiX_{(4-a)}$$

in which each R is independently a monovalent organic radical where at least 10 percent is phenyl and at least two R per molecule is alkenyl or methacryloxyalkylene, X is a hydrolyzable radical and a has an average value of from 1.2 to 1.8, to make a silicone resin of the average general siloxane unit formula

$$R_aSiO_{(4-a)/2}$$

in which R and a are defined above, then reacting the silicone resin with a compound containing both a thiol and an organofunctionality selected from the group consisting of -C(O)OH, -C(O)OR$^3$, -COH, -NH$_2$, -NHR$^3$ -N(R$^3$)$_2$ or -N(H)-C(O)- wherein each R$^3$ is independently an alkyl radical of 1 to 10 carbon atoms, to obtain a silicone resin which has the following formula $(SiO_2)_b(R'SiO_{3/2})_c(R''SiO_{3/2})_d(R^*R'SiO)_e(R^*R''SiO)_f(R^*R'R''SiO_{1/2})_g$ where b, c, d, e, f and g represent the mole percentages of the siloxane units in the silicone resin and the sum of b, c, d, e, f and g is 100 mole percent siloxane units, b has an average value to provide from 0 to 20 mole percent wherein the total number of siloxane units is 100 mole percent, the sum of c + d has an average value to provide from 7.5 mole percent to 60 mole percent or less of $R'SiO_{3/2}$ units and/or $R''SiO_{3/2}$ units where the total number of siloxane units is 100 mole percent, e and f have values from zero to a value providing the remainder of siloxane units to make 100 mole percent, g has an average value to provide 3 mole percent to 40 mole percent of $R^*R'R''SiO_{1/2}$ units whree the total number of siloxane units is 100 mole percent, each R* is independently an alkyl, halogenated alkyl or aryl, each R' is R* or an aliphatic unsaturated radical which reacts with mercapto functionality and selected from the group consisting of alkenyl and methacryloxy of the formula

$$-R^{**}OC(O)C(CH_3)=CH_2$$

each R'' is independently R*, R' or an organofunctional group which contains -C(O)OH, -C(O)OR$^3$, -COH, -NH$_2$, -NHR$^3$, -N(R$^3$)$_2$ or -N(H)-C(O)- and each R** is independently a divalent hydrocarbon radical of 1 to

10 carbon atoms.

**4.** A method of making a cured film comprising mixing to form a compatible, homogeneous blend, to make a composition,

a silicone resin having a general average unit formula

$$R_aSiO_{(4-a)/2}$$

in which each R in each unit is independently a monovalent organic radical where at least 10 mole percent of the total R are phenyl radicals and at least two R per molecule are aliphatic unsaturated radicals which react with mercapto functionality and a has an average value of from 1.2 to 1.8 ;

an organic mercaptan composed of carbon, hydrogen, sulfur and oxygen in which there is at least two mercapto groups per molecule ;

an organofunctional organic mercaptan composed of either carbon and hydrogen or carbon, hydrogen and oxygen and at least one thiol group and at least one organofunctional group selected from the group consisting of -C(O)OH, $-C(O)OR^3$, -COH, $-NH_2$, $-NHR^3$, $-N(R^3)_2$ or -N(H)-C(O)- in which each $R^3$ is independently an alkyl of 1 to 10 carbon atoms ;

an effective amount of photoinitiator to cause the composition to cure upon exposure to ultraviolet radiation ; and

an effective amount of a free radical inhibitor to delay gellation during storage,

the composition having more than two aliphatic unsaturated radicals per molecule in the silicone resin when the organic mercaptan has two mercapto groups per molecule or more than two mercapto groups per molecule in the organic mercaptan when the silicone resin has an average of two aliphatic unsaturated radicals per molecule or both more than two aliphatic unsaturated radicals per molecule in the silicone resin and more than two mercapto groups per molecule in the organic mercaptan and amount of silicone resin and organic mercaptan being such that there is from 0.5 to 1.5 aliphatic unsaturated radicals in the silicone resin for each mercapto group in the organic mercaptan,

applying the composition to a substrate, and

irradiating the composition with ultraviolet radiation in an amount sufficient to cure the composition.